# EUROPÄISCHE PATENTSCHRIFT

(11) **EP 1 562 750 B1**
(45) Veröffentlichungstag und Bekanntmachung des Hinweises auf die Patenterteilung: **04.06.2008**
(21) Anmeldenummer: 03732548.7
(22) Anmeldetag: 06.06.2003
(51) Int. Cl.: B32B 27/34, A22C 13/00

(54) **MEHRSCHICHTIGE FLÄCHEN- ODER SCHLAUCHFÖRMIGE NAHRUNGSMITTELHÜLLE ODER-FOLIE**
MULTILAYER PLANAR OR TUBULAR FOODSTUFF WRAPPING OR FILM
ENVELOPPE OU FILM ALIMENTAIRE MULTICOUCHE PLAN OU TUBULAIRE

(30) Priorität: 20.11.2002 DE 10254172
(43) Veröffentlichungstag der Anmeldung: 17.08.2005
(73) Patentinhaber: KUHNE ANLAGENBAU GmbH, D-53757 Sankt Augustin (DE)
(72) Erfinder: SCHIFFMANN, Jürgen, 53773 Hennef-Rott (DE)
(74) Vertreter: Kuhnen & Wacker
(86) Internationale Anmeldenummer: PCT/EP2003/005984
(87) Internationale Veröffentlichungsnummer: WO 2004/045852

(56) Entgegenhaltungen:
- EP-A- 0 372 489
- EP-A- 0 505 575
- EP-A- 1 018 424
- WO-A-02/26494
- WO-A-96/16799
- US-A- 3 826 676

## Beschreibung

Die vorliegende Erfindung betrifft eine mehrschichtige flächen- oder schlauch-förmige Nahrungsmittelhülle oder -folie für Lebensmittelverpackungen, wie beispiels-weise Wursthüllen, nach dem Oberbegriff des Anspruchs 1 oder dem Oberbegriff des Anspruchs 2. Ein derartige Hülle ist aus EP-A-0 372 489 bekannt.

Aus der DE 32 12 343 A1 ist eine schlauchförmige Verpackungshülle aus zwei-lagigem Folienlaminat bekannt geworden.

Ferner ist eine mehrschichtige, schlauchförmige Verpackungshülle für pastöses Füllgut, insbesondere eine künstliche Wursthülle, auf Basis von Polyamid in der DE 40 17 046 A1 als auch in der EP 0 467 039 A2 diskutiert.

In der Praxis werden derartige Wursthüllen oder Kunstdärme zum Verpacken von Wurst oder pastösen Dingen eingesetzt. Das zu verpackende Produkt, wie beispiels-weise eine Wurstmasse, wird in den Kunstdarm gefüllt, darin gebrüht, gekühlt und gela-gert. Daraus ergeben sich Anforderungen, wie beispielsweise eine ausgeprägte Dimen-sionsstabilität über den gesamten Verarbeitungsprozeß oder ein ausreichender Schutz des Füllgutes vor äußeren Einflüssen, wie beispielsweise Sauerstoffzutritt, UV-Strah-lung, Austrocknung oder dergleichen.

Die aus der Praxis bekannten klassischen Wursthüllen können grob in drei Typen unterteilt werden: Die klassische einschichtige Wursthülle aus Polyamid, deren wesent-licher Nachteil die fehlende Wasserdampfsperre ist. Eine vielfach verwendete Wursthülle aus drei Schichten, welche von außen nach innen betrachtet Polyamid, Polyolefin, vor-zugsweise Polyethylen, Polyamid enthalten. Die bei der einschichtigen Wursthülle feh-lende Wasserdampfbarriere wird durch die mittlere Polyolefinschicht gebildet. Die innere Schicht aus Polyamid sorgt für eine ausreichende Bräthaftung und dafür, daß es zu keiner Ausfällung oder Absetzung von Gelee kommt. Dabei kann diese Poly-amidschicht auch durch eine entsprechend vorbehandelte (Corona) PE-Schicht ersetzt werden, wobei dann die PE-Schicht modifiziert werden muß, um eine zufrieden-stel-lende Verbindung mit dem PA einzugehen. In der jüngeren Zeit haben sich Wursthüllen mit fünf Schichten in der Praxis bewährt. Die von außen nach innen gezählten fünf Schichten enthalten PA, einen Haftvermittler, PE, einen Haftvermittler und zuletzt wie-der PA. Dieser Aufbau entspricht vom Ansatz her der Wursthülle aus drei Schichten, weist jedoch jeweils zwischen PA und PE bzw. PE und PA eine separate Klebeschicht bzw. einen separaten Haftvermittler auf. Dadurch kann man die mittlere Polyolefin-Schicht in Bezug auf die verwendeten Rohstoffe oder Mischungen stärker variieren.

Ungeachtet dessen sind die damit verfügbare Sauerstoffbarriere als auch die Aromabarriere noch nicht ausreichend dicht ausgebildet.

Dementsprechend ist es Aufgabe der vorliegenden Erfindung - unter Vermeidung der vorstehenden Nachteile - eine gattungsgemäße mehrschichtige flächen- oder schlauchförmige Nahrungsmittelhülle oder -folie derart weiterzubilden, daß eine ausrei-chend dichte Sauerstoffbarriere bei einer zufriedenstellenden Aromabarriere zur Verfügung gestellt werden kann.

Diese Aufgabe wird gelöst durch die Merkmale des Anspruchs 1 sowie durch die Merkmale des Anspruchs 2.

Erfindungsgemäß wird hierbei eine mehrschichtige flächen- oder schlauchförmige Nahrungsmittelhülle oder -folie für Lebensmittelverpackungen, wie beispielsweise Wursthüllen, vorgeschlagen, die sich erstmals durch einen Schichtenaufbau mit wenigstens sieben Schichten, auszeichnet, wobei eine der wenigstens fünf Schichten als Schichtbestandteil PVA ent-hält.

Für eine besonders bevorzugte Variante der erfindungsgemäßen mehrschichtigen flä-chen- oder schlauchförmigen Nahrungsmittelhülle oder -folie für Lebensmittelverpac-kungen wird dabei gemäß Anspruch 1 erstmals der folgende, von außen nach innen gezählte Schichtenaufbau vorgeschlagen:
die erste Schicht von außen enthält als Schichtbestandteil Polyamid, die zweite Schicht PVA, die dritte Schicht Polyamid, die vierte Schicht einen Haftvermitt-1er, die fünfte Schicht ein Polyolefin, vorzugsweise Polyethylen, die sechste Schicht einen Haftvermittler und die siebte Schicht von außen, die zugleich die innerste bzw. die dem zu verpackenden Lebensmittel zugewandte Schicht ist, als Schichtbestandteil ein Polyamid.

Für eine weitere besonders bevorzugte Varianten der erfindungsgemäßen mehrschichtigen flä-chen- oder schlauchförmigen Nahrungsmittelhülle oder -folie für Lebensmittelverpac-kungen wird dabei gemäß Anspruch 2 erstmals der folgende, von außen nach innen gezählte Schichtenaufbau vorgeschlagen:
die erste Schicht von außen enthält als Schichtbestandteil Polyamid, die zweite Schicht einen Haftvermittler, die dritte Schicht Polyamid, die vierte Schicht PVA, die fünfte Schicht Polyamid, die sechste Schicht einen Haftvermittler und die siebte Schicht von außen, die zugleich die innerste bzw. die dem zu verpackenden Lebensmittel zugewandte Schicht ist, als Schichtbestandteil ein Polyamid.

Hierbei ergibt in vorteilhafter Weise PVA die gewünschte hohe Sauerstoffbarriere bei einer zugleich wesentlich verbesserten Aromabarriere. Ferner wird damit eine geschmeidigere und weichere Folie erzielt, die in Bezug auf deren mechanische Weiter-verarbeitbarkeit wesentlich verbessert ist. Dabei wird unter PVA Polyvinylalkohol ver-standen, den man auch mit PVOH oder PVAL abkürzen kann. Unter PVA soll dabei sowohl PVA als auch Mischungen von PVA mit anderen Polymeren verstanden werden.

Das PA ermöglicht die Sicherstellung der gewünschten mechanischen Eigenschaften. Mit dem PE kann positiv auf die Siegelbarkeit eingewirkt werden. Ferner erhält man mit EVA einen hohen Schrumpf als auch eine weitere Beeinflußbarkeit der mechanischen Eigenschaften, wobei hierzu ergänzend eine Elektronenstrahl-Behand-lung vorzusehen ist.

Dabei umfassen die Polyolefine sowohl PE und PP als auch EVA und EM(M)A im Sinne dieser Anmeldung sowie Mischungen von Polyolefinen als solchen als auch mit Ionomeren. Die Haftvermittler (kurz: HV) stehen für eine Klebeschicht.

Ferner steht PA allgemein für PA sowie für PA 6, PA 66, PA 6/66, PA 6/12 oder dergleichen als auch für Mischungen hiervon sowie für Mischungen von PA mit ande-ren Polymeren. Weiterhin steht EVA gleichsam für EVA als auch für Mischungen von EVA mit Polymeren.

Damit wird in vorteilhafter Weise eine Nahrungsmittelhülle oder -folie für Lebensmittelverpackungen, insbesondere für Wursthüllen oder dg1. geschaffen, mit der ein gezielter Schrumpf von wenigstens 10 bis 20 %, vorzugsweise von wenigstens 12 bis 15 %, problemlos möglich ist.

Speziell bei Schrumpfbeuteln oder dgl. ist mit den erstmalig vorgeschlagenen Schichtaufbauten in vorteilhafter Weise ein besonders hoher Schrumpf erzielbar, der wenigstens 20 bis 60 %, vorzugsweise wenigstens 30 bis 50 %, bei einer Wassertempe-ratur von um 95°C beträgt.

Der zugleich damit verfügbare Überdehnungsfaktor liegt bei Wursthüllen wie bei Schrumpfbeuteln wenigstens 5 bis 15 %, vorzugsweise bei 10 bis 12 %.

Für die bei Schrumpfbeuteln vorzusehenden Siegelschichten auf der Innen-und/oder Außenseite kann bei den erstmalig vorgeschlagenen Schichtaufbauten vorteil-haft als Rohstoff beispielsweise ein Polyolefin, vorzugsweise PE, LLDPE, EVA oder Ionomere oder Mischungen hiervon oder dergleichen vorgesehen werden.

Aufgrund der durch den Schichtbestandteil PVA erzielten, besonders stark ausge-prägten Sauerstoffbarriere ist eine hervorragende Haltbarkeit der damit verpackten Lebensmittel, insbesondere einer in der Wursthülle befindlichen Wurstmasse über mehr als sechs Wochen ohne jegliche Qualitätsminderung gewährleistet.

Dank der extrem gut ausgebildeten Sauerstoffbarriere steht mit der erfindungsge-mäßen Nahrungsmittelhülle oder -folie erstmals eine Lebensmittelverpackung zur Ver-fügung, mit der auch besonders luftempfindliche Güter selbst bei langen Lagerzeiten beispielsweise keiner farblichen Veränderung unterzogen sind oder gar Gefahr laufen, durch Eintritt von Sauerstoff zu altern oder ihren Geschmack zu verändern.

So wird der Schichtbestandteil PVA bei einem bevorzugten Schichtaufbau ähnlich einem Sandwich zwischen zwei Schichten mit Polyamid als Schichtbestandteil einge-bettet, was zu einer möglichst hohen Sauerstoffbarriere führt und zugleich eine hervor-ragende Einbettung und Stabilisierung der PVA-Schicht zwischen die beiden Polyamid-Schichten als Trägerschichten gewährleistet.

Zugleich steht mit dem erfindungsgemäßen Schichtenaufbau eine besonders her-vorragende Wasserdampfbarriere zur Verfügung, was insbesondere bei Wurst oder anderen Lebensmitteln, die frischhaltebedürftig sind, entscheidend ist. Mit der erfin-dungsgemäßen Nahrungsmittelhülle oder -folie verpackte Lebensmittel bleiben deshalb besonders lange frisch.

Ferner eignet sich die erfindungsgemäße Nahrungsmittelhülle oder -folie als Schrumpffolie und kann beim Verkleben auch gut gesiegelt werden. Sofern die erfin-dungsgemäße Nahrungsmittelhülle oder -folie als Wursthülle eingesetzt wird, ist ebenso ein reines Kleben problemlos möglich.

Die äußerste Schicht der erstmalig vorgeschlagenen Nahrungsmittelhülle oder -folie ist besonders gut beschrift- oder bedruckbar.

Darüber hinaus läßt sich die erfindungsgemäße Nahrungsmittelhülle oder - folie besonders gut mit entsprechenden Anlagen der selben Anmelderin herstellen und weiter verarbeiten.

Vorteilhafte Weiterbildungen der Erfindung ergeben sich aus den Merkmalen der Unteransprüche.

So ist es bei einer bevorzugten Ausführungsform der erfindungsgemäßen Nah-rungsmittelhülle oder -folie für Lebensmittelverpackungen vorgesehen, daß Schichten, die Polypropylen oder Polyolefin als Schichtbestandteil enthalten, alternativ auch Poly-propylen, EVA (Ethyl-Vinyl-Alkohol), EM(M)A, Ionomere oder Mischungen von die-sen oder dgl. enthalten.

Weiterhin ist in einer bevorzugten Ausführungsform vorgesehen, daß Schichten, die einen Haftvermittler enthalten, einen Haftvermittler aufweisen, der auf PE, EVA, EM(M)A oder einem Ionomer als Grundstoff basiert.

Gemäß einer weiter bevorzugten Ausführungsform ist vorgesehen, daß Schichten, die einen Haftvermittler als Bestandteil aufweisen, alternativ ein Gemisch aus Polyole-fin und Haftvermittler oder ein Gemisch aus EVA und/oder EM(M)A und Haftverrnitt-ler enthalten.

Gemäß einer weiter bevorzugten Ausführungsform der erfindungsgemäßen Nah-rungsmittelhülle oder -folie ist vorgesehen, daß Schichten, die Polyamid als Schichtbe-standteil aufweisen, alternativ einen Ionomer enthalten.

Ferner ist gemäß einer bevorzugten Ausführungsform vorgesehen, daß Schichten, die Polyamid als Schichtbestandteil aufweisen, alternativ MXD6 enthalten.

Nicht zuletzt ist gemäß einer bevorzugten Ausführungsform vorgesehen, daß Schichten, die Polyamid als Schichtbestandteil aufweisen, Polycaprolactam (PA 6), Polyhexamethylenadipinamid (PA 66), PA 6/66, PA 11, PA 12 oder Mischungen aus diesen Polyamiden oder dgl. enthalten.

Mit der vorliegenden Erfindung wird damit erstmals eine flächen- oder schlauch-förmige Nahrungsmittelhülle oder -folie mit einem wenigstens siebenschichtigen Schichtaufbau vorgeschlagen.

## Patentansprüche

1. Mehrschichtige flächen- oder schlauchförmige Nahrungsmittelhülle oder -folie für Lebensmittelverpackungen, insbesondere Wursthüllen, aufweisend einen Schichtenaufbau mit wenigstens, sieben, Schichten, wobei eine der wenigstens sieben Schichten als Schichtbestandteil PVA enthält, **dadurch gekennzeichnet, daß** die PVA enthaltende Schicht zwischen zwei Schichten eingebettet ist, die Polyamid als Schichtbestandteil enthalten, wobei die Nahrungsmittelhülle eine Wursthülle ist, mit folgendem, von außen nach innen gezählten Schichtenaufbau:
- die erste Schicht von außen enthält als Schichtbestandteil Polyamid,
- die zweite Schicht von außen enthält als Schichtbestandteil PVA,
- die dritte Schicht von außen enthält als Schichtbestandteil Polyamid,
- die vierte Schicht von außen enthält als Schichtbestandteil einen Haftvermittler,
- die fünfte Schicht von außen enthält als Schichtbestandteil ein Polyolefin, vorzugsweise Polyethylen,
- die sechste Schicht von außen enthält als Schichtbestandteil einen Haftvermittler, und
- die siebte Schicht von außen enthält als Schichtbestandteil Polyamid.

2. Mehrschichtige flächen- oder schlauchförmige Nahrungsmittelhülle für Lebensmittelverpackungen, insbesondere Wursthüllen, aufweisend einen Schichtenaufbau mit wenigstens sieben Schichten, wobei eine der wenigstens sieben Schichten als Schichtbestandteil PVA enthält, **dadurch gekennzeichnet, daß** die PVA enthaltende Schicht zwischen zwei Schichten eingebettet ist, die Polyamid als Schichtbestandteil enthalten, wobei die Nahrungsmittelhülle eine Wursthülle ist, mit folgendem, von außen nach innen gezählten Schichtenaufbau:
- die erste Schicht von außen enthält als Schichtbestandteil Polyamid,
- die zweite Schicht von außen enthält als Schichtbestandteil einen Haftvermittler,
- die dritte Schicht von außen enthält als Schichtbestandteil Polyamid,
- die vierte Schicht von außen enthält als Schichtbestandteil PVA,
- die fünfte Schicht von außen enthält als Schichtbestandteil Polyamid,
- die sechste Schicht von außen enthält als Schichtbestandteil einen Haftvermittler, und
- die siebte Schicht von außen enthält als Schichtbestandteil Polyamid.

3. Wursthülle nach einem der Ansprüche 1 oder 2, **dadurch gekennzeichnet, daß** Schichten, die ein Polyolefin, vorzugsweise Polypropylen, als Schichtbestandteil enthalten, alternativ auch weitere Polyolefine, Polypropylen, EVA (Ethyl-Vinyl-Alkohol), EM(M)A, Ionomere oder Mischungen von diesen oder dergleichen enthalten.

4. Wursthülle nach einem der Ansprüche 1 bis 3, **dadurch gekennzeichnet, daß** Schichten, die einen Haftvermittler enthalten, einen Haftvermittler aufweisen, der auf PE, EVA, EM(M)A oder einem Ionomer als Grundstoff basiert.

5. Wursthülle nach einem der Ansprüche 1 bis 4, **dadurch gekennzeichnet, daß** Schichten, die einen Haftvermittler als Bestandteil aufweisen alternativ ein Gemisch aus Polyolefin und Haftvermittler oder ein Gemisch aus EVA und/oder EM(M)A und Haftvermittler enthalten.

6. Wursthülle nach einem der Ansprüche 1 bis 5, **dadurch gekennzeichnet, daß** Schichten, die Polyamid als Schichtbestandteil aufweisen, alternativ einen Ionomer enthalten.

7. Wursthülle nach einem der Ansprüche 1 bis 6, **dadurch gekennzeichnet, daß** Schichten, die Polyamid als Schichtbestandteil aufweisen, alternativ MXD6 enthalten.

8. Wursthülle nach einem der Ansprüche 1 bis 7, **dadurch gekennzeichnet, daß** Schichten, die Polyamid als Schichtbestandteil aufweisen, Polycaprolactam (PA 6), Polyhexamethylenadipin-amid (PA 66), PA 6/66, PA 11, PA 12 oder Mischungen aus diesen Polyamiden oder dergleichen enthalten.

## Claims

1. Multilayer planar or tubular food casing or film for food packagings, in particular for sausage casings, comprising a layered structure having at least seven layers, with one of the at least seven layers containing PVA as a layer constituent,
**characterized in that** the layer containing PVA is embedded between two layers containing polyamide as a layer constituent, wherein the food casing is a sausage casing having the following layered structure when counted from the outside to the inside:
- the first layer from the outside contains polyamide as a layer constituent,
- the second layer from the outside contains PVA as a layer constituent,
- the third layer from the outside contains polyamide as a layer constituent,
- the fourth layer from the outside contains an adhesion promoter as a layer constituent,
- the fifth layer from the outside contains a polyolefin, preferably polyethylene, as a layer constituent,
- the sixth layer from the outside contains an adhesion promoter as a layer constituent, and
- the seventh layer from the outside contains polyamide as a layer constituent.

2. Multilayer planar or tubular food casing or film for food packagings, in particular for sausage casings, comprising a layered structure having at least seven layers, with one of the at least seven layers containing PVA as a layer constituent, **characterized in that** the layer containing PVA is embedded between two layers containing polyamide as a layer constituent, wherein the food casing is a sausage casing having the following layered structure when counted from the outside to the inside:
- the first layer from the outside contains polyamide as a layer constituent,
- the second layer from the outside contains an adhesion promoter as a layer constituent,
- the third layer from the outside contains polyamide as a layer constituent,
- the fourth layer from the outside contains PVA as a layer constituent,
- the fifth layer from the outside contains polyamide as a layer constituent,
- the sixth layer from the outside contains an adhesion promoter as a layer constituent, and
- the seventh layer from the outside contains polyamide as a layer constituent.

3. Sausage casing in accordance with any one of Claims 1 or 2, **characterized in that** layers containing a polyolefin, preferably polypropylene, as a layer constituent alternatively also contain additional polyolefins, polypropylene, EVA (ethyl vinyl alcohol), EM(M)A, ionomers, or mixtures of these, etc.

4. Sausage casing in accordance with any one of Claims 1 to 3, **characterized in that** layers containing an adhesion promoter include an adhesion promoter based on PE, EVA, EM(M)A or an ionomer as a base material.

5. Sausage casing in accordance with any one of Claims 1 to 4, **characterized in that** layers including an adhesion promoter as a constituent alternatively contain a mixture of polyolefin and adhesion promoter or a mixture of EVA and/or EM(M)A and adhesion promoter.

6. Sausage casing in accordance with any one of Claims 1 to 5, **characterized in that** layers including polyamide as a layer constituent alternatively contain an ionomer.

7. Sausage casing in accordance with any one of Claims 1 to 6, **characterized in that** layers including polyamide as a layer constituent alternatively contain MXD6.

8. Sausage casing in accordance with any one of Claims 1 to 7, **characterized in that** layers including polyamide as a layer constituent contain polycaprolactame (PA 6), polyhexamethylene adipinamide (PA 66), PA 6/66, PA 11, PA 12, or mixtures of these polyamides, etc.

## Revendications

1. Enveloppe ou film alimentaire multicouche de forme plane ou tubulaire pour le conditionnement d'aliments, en particulier enveloppe pour saucisses, présentant une structure en couches ayant au moins sept couches, l'une au moins des sept couches contenant comme composant de couche du PVA,
**caractérisé en ce que** la couche contenant du PVA est incrustée entre deux couches qui contiennent comme composant de couche du polyamide, l'enveloppe alimentaire étant une enveloppe pour saucisses, ayant la structure de couches suivante, de l'extérieur vers l'intérieur :
- la première couche depuis l'extérieur contient comme composant de couche du polyamide,
- la deuxième couche depuis l'extérieur contient comme composant de couche du PVA,
- la troisième couche depuis l'extérieur contient comme composant de couche du polyamide,
- la quatrième couche depuis l'extérieur contient comme composant de couche un agent adhésif,
- la cinquième couche depuis l'extérieur contient comme composant de couche un polyoléfine, de préférence un polyéthylène,
- la sixième couche depuis l'extérieur contient comme composant de couche un agent adhésif,
- la septième couche depuis l'extérieur contient comme composant de couche du polyamide.

2. Enveloppe ou film alimentaire multicouche plan ou tubulaire pour le conditionnement d'aliments, en particulier enveloppe pour saucisses, présentant une structure en couches ayant au moins sept couches, l'une au moins des sept couches contenant comme composant de couche du PVA,
**caractérisé en ce que** la couche contenant du PVA est incrustée entre deux couches qui contiennent comme composant de couche du polyamide, l'enveloppe alimentaire étant une enveloppe pour saucisses, ayant la structure de couches suivante, de l'extérieur vers l'intérieur :
- la première couche depuis l'extérieur contient comme composant de couche du polyamide,
- la deuxième couche depuis l'extérieur contient comme composant de couche un agent adhésif,
- la troisième couche depuis l'extérieur contient comme composant de couche du polyamide,
- la quatrième couche depuis l'extérieur contient comme composant de couche du PVA,
- la cinquième couche depuis l'extérieur contient comme composant de couche du polyamide,
- la sixième couche depuis l'extérieur contient comme composant de couche un agent adhésif,
- la septième couche depuis l'extérieur contient comme composant de couche du polyamide.

3. Enveloppe pour saucisses selon l'une quelconque des revendications 1 ou 2, **caractérisée en ce que** les couches qui contiennent un polyoléfine, de préférence un polypropylène, comme composant de couche, contiennent en variante d'autres polyoléfines, polypropylènes, EVA (éthyle-vinyle-alcool), EM(M)A, ionomères ou mélanges de ceux-ci ou de similaires.

4. Enveloppe pour saucisses selon l'une quelconque des revendications 1 à 3, **caractérisée en ce que** les couches qui contiennent un agent adhésif comprennent un agent adhésif à base de PE, d'EVA, d'EM(M)A ou d'un ionomère comme corps simple.

5. Enveloppe pour saucisses selon l'une quelconque des revendications 1 à 4, **caractérisée en ce que** les couches qui contiennent un agent adhésif comme composant contiennent en variante un mélange de polyoléfine et agent adhésif ou un mélange d' EVA et/ou d'EM (M) A et d'agent adhésif.

6. Enveloppe pour saucisses selon l'une quelconque des revendications 1 à 5, **caractérisée en ce que** les couches qui comprennent du polyamide comme composant de couche contiennent en variante un ionomère.

7. Enveloppe pour saucisses selon l'une quelconque des revendications 1 à 6, **caractérisée en ce que** les couches qui comprennent du polyamide comme composant de couche contiennent en variante du MXD6.

8. Enveloppe pour saucisses selon l'une quelconque des revendications 1 à 7, **caractérisée en ce que** les couches qui comprennent du polyamide comme composant de couche contiennent du polycaprolactame (PA 6), un polyhexaméthylène diamine adipamide (PA 66), du PA 6/66, du PA 11, du PA 12 ou des mélanges de ces polyamides ou similaires.
